# EUROPEAN PATENT SPECIFICATION

(11) **EP 3 238 827 B1**
(45) Date of publication and mention of the grant of the patent: **21.11.2018**
(21) Application number: 17166176.2
(22) Date of filing: 12.04.2017
(51) Int. Cl.: B02C 18/14, B02C 18/22, B02C 19/00

(54) **BONEMILL**
KNOCHENMÜHLE
MOULIN À OS

(30) Priority: 13.04.2016 FI 20165314
(43) Date of publication of application: 01.11.2017
(73) Proprietor: Oy T. Björklund Ab, 68600 Jakobstad (FI)
(72) Inventor: Björklund, Tor, 68600 Jakobstad (FI)
(74) Representative: Kolster Oy Ab

(56) References cited:
- DE-U1-202015 002 207
- US-A- 3 762 256

## Description

### TECHNICAL AREA

The present invention refers to a bonemill according to the preamble of claim 1. Such a device is particularly suitable for milling slaughter residues in the form of bones and bone-like residues. However, nothing prevents the present invention from being used at the handling other kinds of meat as well.

### PRIOR ART

The handling of slaughter residues and other animal-related waste is generally associated with major difficulties and costs. The waste must be destroyed, according to the law, by way of combustion or composting. Nowadays it is also possible to use at least a part of such waste in the manufacture of fertiliser and bio-fuels. Handling of animal-related waste requires a special logistics chain that prevents mixture with other waste. Careful sanitary regulations must also be complied with when handling and processing the waste.

Apart from these handling difficulties and the costs associated therewith, in the current handling large parts of the nutritional and energy value present in animal-related waste are also lost. A bonemill according the preamble of claim 1 is disclosed in DE202009012352U1.

### PROBLEMS

With the present invention, the problems associated with prior art solutions may be substantially avoided. The innovative bonemill features the characteristics specified in claim 1. The following dependent claims specify suitable further developments and variants of the invention, respectively, that further improve its function.

The invention is based on the idea that by simple means the currently problematic waste may be converted into a more attractive raw material, or the handling thereof at continued destruction may at least be simplified.

Several significant advantages over prior art are achieved thanks to the device described in the present invention. Thus, the invention offers an opportunity to considerably improve the utilisation and handling of bone-like slaughter residues in particular. This may involve residues that arise in commercial slaughterhouses, or residues arising in different types of livestock production. The processing results in an end product that is suitable for several types of further processing. The residues may, for example, be used in pet food or in animal feed for the fur industry or in fish farming. In this manner, what is presently a problematic waste product may instead be fully utilised as the valuable raw material that it is.

A device according to the present invention with which slaughter and animal residues are processed is reliable and easy both to use and to maintain. The device may also be dimensioned according to various processing quantities and the displayed milling bodies and milling inserts can be replaced with new ones in a few easy steps.

The limited protrusion of the milling inserts entails that aggressive disposal of the processable material is avoided. This makes it easier to find a suitable use for the resulting milled pulp and limits the demands on the engine that operates the milling inserts.

Thanks to it simple construction, the device presented herein is easy to clean in order to meet the current sanitary requirements. Additionally, tests performed have showed that with the present invention it is possible to avoid soiling of both the device and the work area in the immediate vicinity of the device.

Additional advantages and details of the invention are set out in further detail in the description below of the preferred embodiments of the device.

### SUMMARY OF DRAWING FIGURES

Below, the invention is described in more detail with reference to the drawing, where
figure 1 shows a schematic axonometric image of a preferred embodiment of the invention,
figure 2 shows a schematic longitudinal section of a device according to figure 1,
figure 3 shows a more detailed view of the milling unit in a device according to figure 1,
figure 4 shows a schematic axonometric image of the device's milling unit,
figure 5 shows a detailed view of the meeting of the milling body and the engagement part and a first embodiment of the milling inserts and their attachment in the milling body,
figure 6 shows a milling body which is used in the milling unit of the present device with visible recesses for screw joints,
figure 7 shows a second embodiment of the milling insert and its attachment,
figure 8 shows a cross-section of a milling insert and its attachment, wherein the insert's displacement in relation to the milling body's radius is visible,
figure 9 shows an engagement part used at a milling unit in the present device, and
figure 10 shows an enlargement of the meeting between the milling body's cutting edge and the engagement part.

### PREFERRED EMBODIMENT

The above figures do not show the bonemill at scale, but instead their only task is to illustrate the preferred embodiments' constructive solutions and the function of the embodiments. In that context, the respective constructive parts displayed in the figures and marked with reference numbers correspond to the construction solutions presented with corresponding reference numbers in the description below.

Accordingly, the figures show an advantageous embodiment of the present bonemill 1. Such a device includes, among others, a processing channel 2 that may be arranged on a prior art workbench or an equivalent carrying frame, preferably with adjustable height. The frame is not a part of the present device and is not displayed in any detail in the figures. The processing channel has a transport element 3 for transportation of a processable material 4. The processing channel advantageously has a refill opening 5 at one end while its opposite end is arranged against a milling unit 6. This milling unit is arranged to process said material, which the transport element moves from the refill opening toward the milling unit.

The material 4 may comprise slaughter and animal residue, meat or other materials that must be crushed finely for further processing or use. It is most advantageous to handle bones, joints and vertebra that could not easily be mixed and processed with existing methods. The material may consist of fresh slaughter residue, but the residue may also be processed after slaughter by way, for example, of boiling, cutting or crushing.

The transport element 3 is thus arranged to move the material 4 toward the milling unit 6. This milling unit comprises two or several milling bodies 7 arranged in pairs which in turn have a number of replaceable milling inserts 8 protruding from the milling body's substantially cylindrical surface in a substantially perpendicular direction in relation to the rotational direction of the milling body. Hereby the milling bodies are arranged to substantially parallel and, when used, preferably horizontal spindles 9. These spindles are in turn arranged in a substantially perpendicular position in relation to the transportation direction 10 of the transport element 3. In the preferred embodiment of the device, which is displayed in the present figures, there are two spindles that create the respective rotational shafts 11 of the milling bodies.

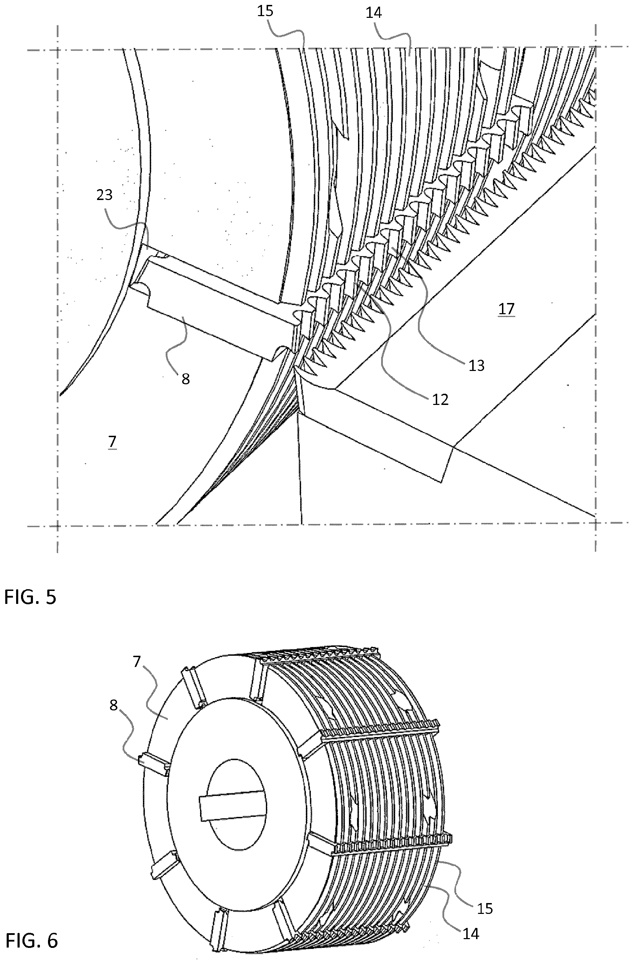

The milling inserts 8 are arranged substantially evenly around the periphery of the respective milling body 7 where they are thus arranged in a substantially perpendicular direction in relation to the rotational direction of the milling body. The inserts have an elongated shape, wherein they comprise a body with a protruding serrated edge, in its part protruding from the top surface of the milling body. This serrated edge thus has pointed and elongated milling edges 12 that are separated from each other by way of intermediate elongated valleys 13. See, for example, figure 5. The milling edges are thus arranged to protrude out from the milling body's substantially cylindrical surface, wherein the protrusion is 1 - 4 mm. The elongated milling edges' combs will therefore be oriented in the rotational direction of the milling body. The mill's function is at its most advantageous, while the resulting end product is at its most useful if the protrusion is in the size range 1 - 2 mm.

The milling inserts 8 displayed by an individual milling body 7 are separate from each other with tracks 14 and ridges 15 in between the tracks formed in the cylindrical surface of the milling body. Similarly to the combs of the elongated milling edges, these tracks and ridges also will be oriented in the rotational direction of the milling body. These ridges form the milling body's outermost periphery whilst they provide resistance keeping the material 4 at a substantially constant distance from the milling inserts. However, the tracks allow a certain amount of elasticity in the material, which is pressed against the milling unit 6 and the individual milling bodies. This elasticity will relieve the milling bodies and prevent an excessively aggressive milling of the material. At the same time, the tracks 14 between the ridges 15 will form grooves in the rotational direction of the milling body receiving the chips that the milling edges 12 lying substantially in line with the tracks 14 release from the material 4. The chips are transported in the grooves and removed from the milling bodies by the centrifugal force that they are exposed to during the continued rotation of the milling body. The centrifugal force is a combination of the rotational speed of the milling body and the diameter of the milling body. The rotational speed is between 3,000 and 10,000 revolutions per minute, while the milling body's diameter is between 20 and 200 mm, advantageously 50 - 150 mm.

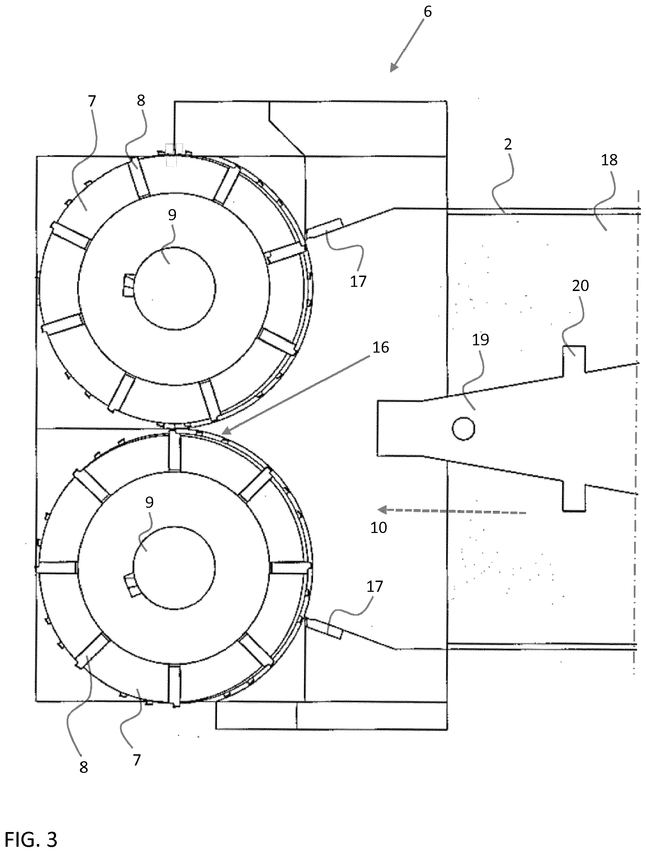

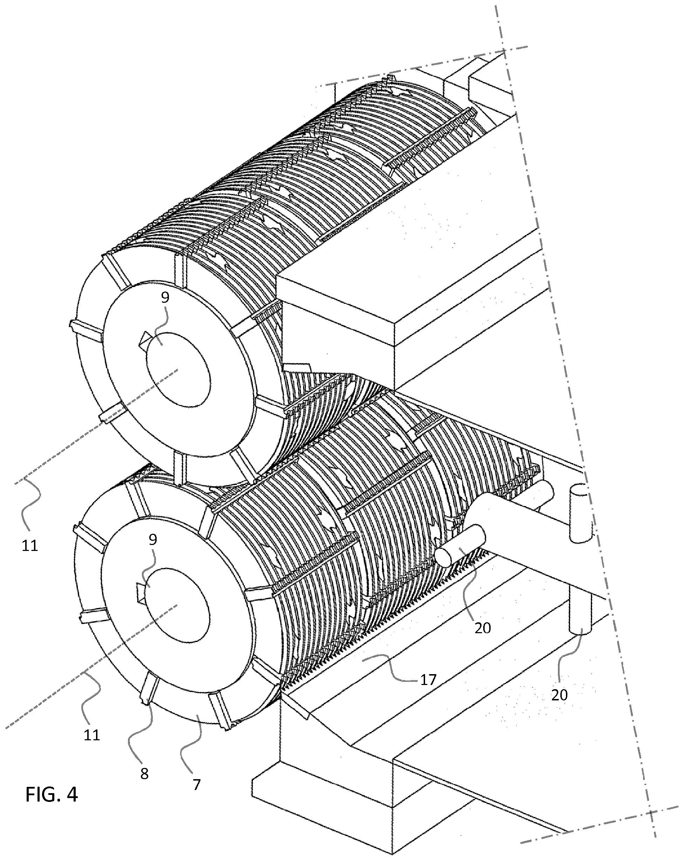

In one advantageous embodiment, the tracks 14 of the milling bodies 7 arranged next to each other and the intermediate ridges 15 form spiral threads in the cylindrical surfaces of the milling bodies. The spiral threads are thus constructed so that they push the processable material 4 against the top and bottom edges of a milling inlet 16 in the processing channel 2 and oriented towards the milling unit 6. Accordingly, looking at the milling unit from the processing channel, the milling unit advantageously has an even number of milling bodies. Herewith, each of the spindles 9 has, for example, 2 - 8 milling bodies, preferably 4 milling bodies. In a structure with four milling bodies in the top spindle and four milling bodies in the bottom spindle, the two top milling bodies on the left hand side push the material upwards to the right, while the two upper milling bodies to the right push the material upwards to the left. The two bottom milling bodies to the left, on the other hand, push the material down to the right, while the two bottom milling bodies to the right push the material down to the left. Through this displacement with the help of the spiral threads, it is possible to avoid an accumulation of materials along the outer edges of the milling inlet 16 and instead to push the material towards an engagement part 17 with a serration oriented toward the milling body. With these engagement parts, arranged to interact with the milling inserts of the milling body, see for example figures 3 - 5, it is possible to prevent the processed material 4 from getting dragged along with the inserts 8 of the milling bodies 7 in their rotation.

By also arranging the spindles 9 with several arranged adjacent milling bodies 7 into one joint body, the maintenance of the milling unit 6 is made substantially easier. Thus, it is possible to release the entire milling unit and to quickly replace it with a new one. Apart from the fact that servicing the released milling unit becomes much simpler, downtime of the bonemill 1 is also avoided.

The bonemill's 1 processing channel 2 is arranged to form a screw housing surrounding the milling material 4. This screw housing features the milling inlet 16 oriented towards the milling unit 6. The milling inlet has an extension in the rotational plane of the milling bodies 7 which is shorter than the total extension of the milling bodies in their rotational plane. The milling inlet also has an extension in the spindle's 9 longitudinal direction which is shorter than the milling unit's processing width.

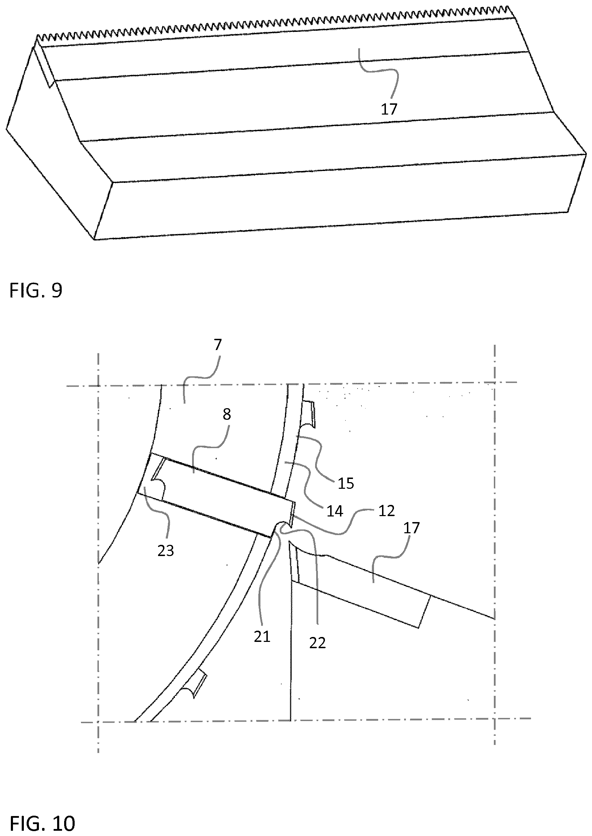

The above described engagement parts 17 are placed as close as possible to the tip of the milling edges 12 of the milling insert 8. See figure 10. By placing the engagement parts at an angle substantially toward the centre of the milling body or the spindle 9, self-feeding is avoided. At the same time, the angle of the engagement part entails that the milling inlet has the above described extension in the rotational plane of the milling bodies 7 which is shorter than the total extension of the milling bodies in their rotational plane. The angle will therefore entail that the material to be processed will be compressed when it is pushed towards the milling unit 6. This compression entails a more even milling, since there is less internal displacement in the material when it is pressed against the milling bodies.

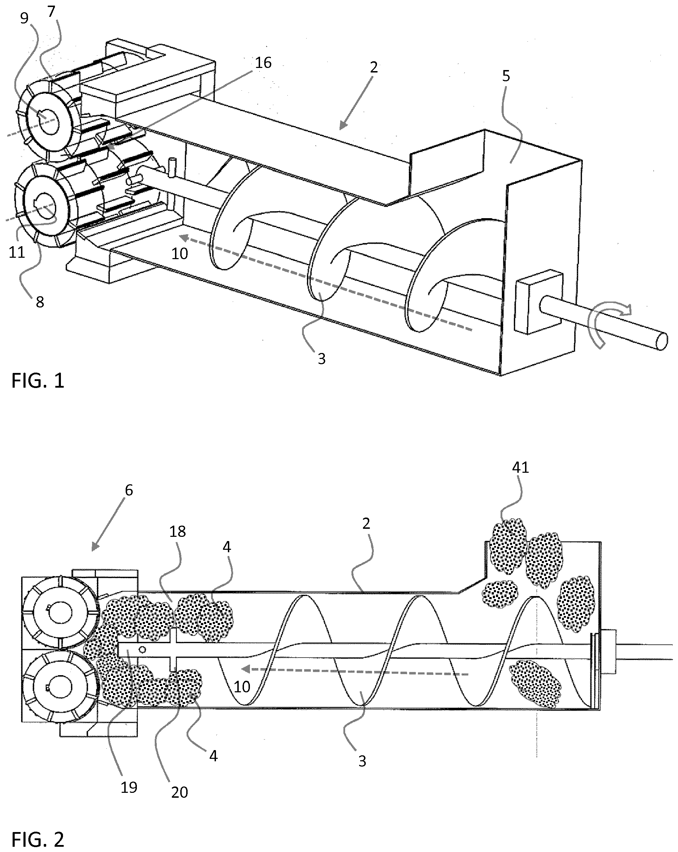

The transport element 3 arranged in the processing channel 2 advantageously comprises a feed screw. This feed screw advantageously has a length which is shorter then the length of the screw housing. In this way, a screwless feeder space 18 is obtained between the milling unit 6 and the feed screw's end, see for example figure 2. The feeder space allows for a slowly increasing compression of the material 4, which in turn relieves the milling unit. Alternatively, the feed screw may have a larger pitch of the screw as one gets closer to the milling unit. If the feed screw 3 is also equipped with a free shaft end 19 with one or several transverse spigots 20, a continuous mixing of the material will take place in the feeding space. This mixing prevents the material from forming vaults that could prevent the material's influx to the milling unit. By also providing the processing channel with a substantially square cross-section with a substantially cylindrical feed screw arranged inside, single large pieces may also be fed through in the corner of the screw housing without such pieces having to rotate with the feed screw, potentially hampering its operation.

In its movement toward the milling unit 6, the material 4 is pressed against the milling inserts 8 of the milling bodies 7. The milling inserts have, as described above, an elongated serration in the form of individual milling edges 12 arranged substantially evenly along the milling insert and arranged to protrude from the same. It is easy to replace the milling body or its milling inserts to make the serration finer or coarser. It is also easy to remedy wear and damage to the milling body.

At the construction of the present bonemill, it has also been noted that it is advantageous to equip the milling inserts with a chipbreaker 21, see especially figure 10. Such a chipbreaker is arranged to form a plateau between the ridges 15 of the milling body adjacent to the milling inserts and the protruding milling edges 12 of the milling inserts. The chipbreaker advantageously protrudes somewhat from the ridge 15, so that it cuts off potential long bone chips arising in the milling unit. At the same time, the chipbreaker prevents an accumulation of chips against the milling edges by forcing the chips up toward an advantageously round or hollowed front 22 of the milling edge, see figure 10. The chipbreaker and the rounded front of the milling edge prevent the chips from being packed against the milling edge and contribute to making the milling edge nearly self-cleaning.

An advantageous construction of the milling body 7 is displayed in more detail at figures 5 and 6. The milling body herewith has recesses 23 for receipt of milling inserts 8 substantially evenly distributed around the periphery of the milling body. The recesses are substantially radial in shape and are placed substantially at a perpendicular angle against the milling body's rotational shaft 11 in its longitudinal direction. The number of recesses, and, therefore, the number of milling inserts arranged along the periphery of the milling body can advantageously be limited so that the mutual distance between the milling inserts allows two consecutive milling inserts of the milling body to be in contact with the material 4 simultaneously. The inserts are attached to the milling body's recess with, for example, one or several screws. By displacing the adjacent milling bodies in relation to each other in their rotational direction, excessively accentuated stabs in the material which is to be milled are avoided, and instead a smoother processing is achieved. The milling inserts may advantageously be fitted to the milling body with the help of a fixture that simplifies a consistent assembly where all the milling edges have an equally large protrusion. The fixture also facilitates using milling inserts with different degrees of wear or different milling edges. With the help of the fixture, the milling inserts' lateral shift is also simplified, which makes it significantly easier and quicker to place the milling edges in line with the tracks 14 of the milling bodies.

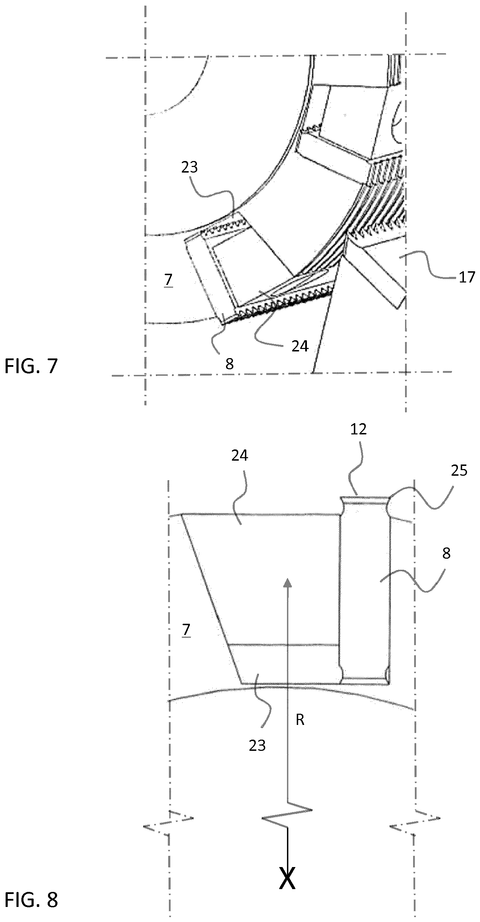

A second advantageous construction of the milling body 7 is displayed in more detail at figures 7 and 8. In this embodiment, the milling body has recesses 23 for receipt of milling inserts 8 as well as fixtures 24 substantially evenly distributed around the periphery of the milling body. In this embodiment as well, the recesses are a substantially radial shape and are placed substantially at a perpendicular angle in relation to the milling body'srolational shaft 11 in its longitudinal direction. The number of recesses, and, therefore, the number of milling inserts arranged along the periphery of the milling body can advantageously be limited so that the mutual distance between the milling inserts allows two consecutive milling inserts of the milling body to be in contact with the material 4 simultaneously. The milling inserts are fitted to the milling body with the help of fixtures so that the milling inserts are somewhat displaced in relation to the radial line R of the milling body. The milling inserts are advantageously symmetrical, wherein they have four engaging parts 25, one in each of the milling insert's corners. If the milling insert becomes dull, it can be turned around quickly to display a new, sharp engagement part. The fixture simplifies a consistent assembly where all the milling edges have an equally large protrusion. With the help of the fixture, the lateral shift of the milling inserts is also simplified, which makes it significantly easier and quicker to place the intermediate valleys 13 of the milling edges in line with the tracks 14 of the milling bodies.

By using a milling insert with an engagement part in each of its corners, the manufacture of both milling inserts and milling bodies becomes easier. The milling insert can also be sharpened without changing its shape. When using fixtures at the assembly of milling inserts, a self-cleaning construction is obtained, since the screw channels of the assembly screws will have a radial shape and be cleaned with the milling body's centrifugal force. The fixture makes it possible to replace the milling inserts in the milling body without the need to dismantle it from the machine.

The engagement parts 17 can also be of the same type as the milling inserts.

To operate the bonemill's 1 milling unit 6, it advantageously features a direct drive engine attached to each of the direct drive spindles. Such an engine achieves in the present invention a rotational speed of between 3,000 and 10,000 revolutions per minute, advantageously around 7,000 revolutions per minute. The engine with associated electrical equipment is easy to dismantle, facilitating both service and cleaning of the device and its parts.

The above described bonemill 1 operates in the following manner. The material 4 to be processed is fed into the processing channel 2 via the refill opening 5. The material is then shifted with the transport element 3 in a substantially continuous movement towards the milling unit 6. Here, the material comes into contact with the pairs of milling bodies 7 arranged to rotate in a mutually opposite direction toward the milling inlet 16. The serrated milling inserts 8 featured in the milling bodies now begin a processing of the part of the material oriented toward the milling unit. At this processing, each individual milling edge 12 cuts small chips out of the material, so that it eventually is fragmented into a finely milled residue product. In the manufactured prototype of the bonemill, the material 4 has been processed at a speed of around 1,300,000 individual cuts per second! The chips are hurled out unhindered between the parallel milling inserts to an adjacent collection vessel (not displayed). The coarseness of the chips is regulated by the size of the milling edge 12. A milling insert with finely toothed milling edges produces small single milling inserts, which means no large pieces will be ripped out of the material and an end product with a very homogeneous thickness is obtained.

The above description and the figures provided therein are only intended to illustrate this solution relating to the construction of a bonemill. Accordingly, the solution is not limited solely to the embodiment described above or in the enclosed claims, but several variations or alternative embodiments are possible within the idea described in the enclosed claims.

## Claims

1. Bonemill (1), which bonemill has a processing channel (2), equipped with a transport element (3) for transportation of at least one millable material (4), which
transport element is arranged to move the material toward a milling unit (6) arranged at a substantially perpendicular angle in relation to the transport direction (10) of the transport element, wherein
the milling unit features milling inserts (8) arranged in recesses (23) substantially radially toward the milling body's rotational shaft (11) and arranged to protrude out from its substantially cylindrical surface, and comprises at least two substantially parallel spindles (9),
which spindles feature milling bodies (7) arranged in pairs and wherein the processing channel (2) is arranged to form a screw housing surrounding the millable material (4), wherein
the processing channel features a milling inlet (16) oriented toward the milling unit (6),
**characterised in that** the spindles include replaceable milling inserts (8) substantially evenly distributed around the periphery of the respective milling body, so that the milling inserts (8) are separated from each other with tracks (14) and intermediate ridges (15) formed in the cylindrical surface of the milling body (7) in its rotational direction, which ridges form the milling body's outermost periphery and at the same time constitute a resistance holding the material (4) at a substantially constant distance in relation to the milling inserts, wherein the milling inlet (16) is oriented toward the milling unit
with an extension in the rotational plane of the milling bodies which is shorter than the total extension of the milling bodies in their rotational plane, and the milling inlet has an extension in the longitudinal direction of the spindle (9) which is shorter than the processing width of the milling unit.

2. Bonemill (1) according to claim 1, **characterised in that** the milling inserts (8) comprise a base with a protruding serrated edge comprising pointed comb-like milling edges (12) separated form each other by intermediate valleys (13).

3. Bonemill (1) according to claim 2, **characterised in that** the milling inserts' (8) milling edges (12) are arranged to protrude 1 - 4 mm from the ridges (15) of the milling body (7), preferably 1 - 2 mm.

4. Bonemill (1) according to claim 2 of 3, **characterised in that** the milling inserts' (8) milling edges (12) are arranged to be substantially in line with the tracks (14) of the milling body (7).

5. Bonemill (1) according to an earlier claim, **characterised in that** each of the spindles (9) features 2 - 8 milling bodies (7), and thus the number is preferably 4 milling bodies per spindle.

6. Bonemill (1) according to any previous claim, **characterised in that** the milling bodies (7) are arranged to the spindle (9) so that the tracks (14) featured on the surface of the milling body in the adjacent milling bodies form spirals operating toward the centre of the milling inlet (16).

7. Bonemill (1) according to any previous claim, **characterised in that** the milling body features a diameter of 20 - 150 mm, so that this diameter is preferably 50 - 100 mm.

8. Bonemill (1) according to any previous claim, **characterised in that** the processing channel (2) features, in its milling inlet (16), engagement parts (17) with a sliding plane oriented in a direction substantially facing the nearest milling body's spindle (9).

9. Bonemill (1) according to claim 8, **characterised in that**, the engagement part (21) features a serration oriented toward the milling body (7) arranged to interact with the milling inserts (8) of the milling body.

10. Bonemill (1) according to any of the previous claims, **characterised in that** the processing channel (2) features a substantially square cross-section with a substantially cylindrically shaped feed screw (3) arranged therein.

11. Bonemill (1) according to claim 10, **characterised in that** the feed screw (3) has a length that is shorter than the length of the screw housing, wherein
a screwless feeding area (18) is obtained between the milling unit (6) and the end of the feed screw.

## Patentansprüche

1. Knochenmühle (1), die einen Verarbeitungskanal (2) aufweist, der mit einem Transportelement (3) zum Transport mindestens eines mahlbaren Materials (4) versehen ist, wobei das Transportelement angeordnet ist, das Material zu einer Mahleinheit (6) zu fördern, die unter einem im Wesentlichen senkrechten Winkel in Bezug auf die Transportrichtung (10) des Transportelements angeordnet ist, wobei
die Mahleinheit Mahleinsätze (8) aufweist, die in Vertiefungen (23) im Wesentlichen radial in Richtung zu der Drehwelle (11) des Mahlkörpers angeordnet und so vorgesehen sind, dass sie aus ihren im Wesentlichen zylindrischen Flächen hervorstehen, und mindestens zwei im Wesentlichen parallele Spindeln (9) aufweist,
wobei die Spindeln Mahlkörper (7) aufweist, die in Paaren angeordnet sind, und wobei der Verarbeitungskanal (2) so angeordnet ist, dass er ein Schneckengehäuse bildet, das das mahlbare Material (4) umgibt, wobei
der Verarbeitungskanal einen Mahleinlass (16) aufweist, der zu der Mahleinheit (6) gerichtet ist,
**dadurch gekennzeichnet, dass**
die Spindeln austauschbare Mahleinsätze (8) enthalten, die im Wesentlichen gleichmäßig um den Rand des entsprechenden Mahlkörpers derart verteilt sind, dass die Mahleinsätze (8) voneinander durch Bahnen (14) und dazwischenliegende Rippen (15) getrennt sind, die in der zylindrischen Oberfläche des Mahlkörpers (7) in seiner Drehrichtung ausgebildet sind, wobei die Rippen den äußersten Rand des Mahlkörpers bilden und gleichzeitig einen Widerstand darstellen, der das Material (4) mit im Wesentlichen gleichbleibenden Abstand in Bezug auf die Mahleinsätze hält, wobei der Mahleinsatz (16) in Richtung zu der Mahleinheit orientiert ist und eine Erweiterung in der Drehebene der Mahlkörper hat, die kürzer ist als die gesamte Erstreckung der Mahlkörper in ihrer Drehebene, und wobei der Mahleinlass eine Erweiterung in der Längsrichtung der Spindel (9) hat, die kürzer als die Verarbeitungsbreite der Mahleinheit ist.

2. Knochenmühle (1) nach Anspruch 1, **dadurch gekennzeichnet, dass** die Mahleinsätze (8) ein Grundelement mit einer hervorstehenden gezackten Kante mit punktweise kammartigen Mahlkanten (12), die durch dazwischenliegende Einsenkungen (13) voneinander getrennt sind, aufweist.

3. Knochenmühle (1) nach Anspruch 2, **dadurch gekennzeichnet, dass** die Mahlkanten (12) der Mahleinsätze (8) so angeordnet sind, dass sie 1 - 4 mm, vorzugsweise 1 - 2 mm, aus den Rippen (15) des Mahlkörpers (7) hervorstehen.

4. Knochenmühle (1) nach Anspruch 2 oder 3, **dadurch gekennzeichnet, dass** die Mahlkanten (12) der Mahleinsätze (8) so angeordnet sind, dass sie im Wesentlichen zu den Bahnen (14) des Mahlkörpers (7) ausgerichtet sind.

5. Knochenmühle (1) nach einem der vorhergehenden Ansprüche, **dadurch gekennzeichnet, dass** jede der Spindeln (9) 2 - 8 Mahlkörper (7) aufweist und dass die Anzahl vorzugsweise 4 Mahlkörper pro Spindel ist.

6. Knochenmühle (1) nach einem der vorhergehenden Ansprüche, **dadurch gekennzeichnet, dass** die Mahlkörper (7) an der Spindel (9) derart angebracht sind, dass die Bahnen (14), die an der Oberfläche des Mahlkörpers vorgesehen sind, in den benachbarten Mahlkörpern Spiralen bilden, die in Richtung auf die Mitte des Mahleinsatzes (16) hin wirksam sind.

7. Knochenmühle (1) nach einem der vorhergehenden Ansprüche, **dadurch gekennzeichnet, dass** der Mahlkörper einen Durchmesser von 20 - 150 mm, vorzugsweise 50 - 100 mm, aufweist.

8. Knochenmühle (1) nach einem der vorhergehenden Ansprüche, **dadurch gekennzeichnet, dass** der Verarbeitungskanal (2) in seinem Mahleinlass (16) Eingriffsteile (17) mit einer Gleitebene aufweist, die in einer Richtung orientiert ist, die im Wesentlichen der Spindel (9) des nächsten Mahlkörpers zugewandt ist.

9. Knochenmühle (1) nach Anspruch 8, **dadurch gekennzeichnet, dass** das Eingriffsteil (21) eine gezackte Gestalt aufweist, die zu dem Mahlkörper (7) hin orientiert ist und ausgebildet ist, mit den Mahleinsätzen (8) des Mahlkörpers zu interagieren.

10. Knochenmühle (1) nach einem der vorhergehenden Ansprüche, **dadurch gekennzeichnet, dass** der Verarbeitungskanal (2) einen im Wesentlichen quadratischen Querschnitt mit einer im Wesentlichen zylindrisch geformten Förderschnecke (3), die darin angeordnet ist, aufweist.

11. Knochenmühle (1) nach Anspruch 10, **dadurch gekennzeichnet, dass** die Förderschnecke (3) eine Länge hat, die kleiner ist als die Länge des Schneckengehäuses, wobei ein schneckenloser Förderbereich (18) zwischen der Mahleinheit (6) und dem Ende der Förderschnecke vorgesehen ist.

## Revendications

1. Moulin à os (1), lequel moulin à os qui possède un canal de traitement (2) équipé d'un élément de transport (3) pour le transport d'au moins un matériau broyable (4), lequel
élément de transport est agencé pour déplacer le matériau vers une unité de broyage (6) disposée selon un angle sensiblement perpendiculaire par rapport à la direction de transport (10) de l'élément de transport, dans lequel
l'unité de broyage comporte des inserts de broyage (8) disposés dans des évidements (23) sensiblement radialement vers l'arbre de rotation (11) du corps de broyage et disposés pour faire saillie de sa surface sensiblement cylindrique,
et comprend au moins deux broches plus ou moins parallèles (9), lesquelles broches comportent des corps de broyage (7) disposés par paires
et dans lequel le canal de traitement (2) est agencé pour former un logement de vis entourant le matériau broyable (4), dans lequel
le canal de traitement comporte une entrée de broyage (16) orientée vers l'unité de broyage (6),
**caractérisé en ce que** les broches comprennent des inserts de broyage remplaçables (8) répartis de manière sensiblement uniforme à la périphérie du corps de broyage respectif, de sorte que les inserts de broyage (8) sont séparés les uns des autres avec des pistes (14) et des nervures intermédiaires (15) formées dans la surface cylindrique du corps de broyage (7) dans son sens de rotation, qui forme la périphérie la plus extérieure du corps de broyage et constitue en même temps une résistance maintenant le matériau (4) à une distance sensiblement constante par rapport aux inserts de broyage, dans lequel l'entrée de broyage (16) est orientée vers l'unité de broyage,
avec une extension dans le plan de rotation des corps de broyage qui est plus courte que l'extension totale des corps de broyage dans leur plan de rotation, et l'entrée de broyage présente une extension dans la direction longitudinale de la broche (9) plus courte que la largeur de traitement de l'unité de broyage.

2. Moulin à os (1) selon la revendication 1, **caractérisé en ce que** les inserts de broyage (8) comportent une base avec un bord dentelé en saillie comprenant des arêtes de broyage en forme de peigne (12) séparées les unes des autres par des creux intermédiaires (13).

3. Moulin à os (1) selon la revendication 2, **caractérisé en ce que** les arêtes de broyage (12) des inserts de broyage (8) sont disposées de manière à faire saillie de 1 à 4 mm des nervures (15) du corps de broyage (7), de préférence 1 à 2 mm.

4. Moulin à os (1) selon les revendications 2 et 3, **caractérisé en ce que** les arêtes de broyage (12) des inserts de broyage (8) sont disposées sensiblement dans l'alignement des pistes (14) du corps de broyage (7).

5. Moulin à os (1) selon une revendication antérieure, **caractérisé en ce que** chacune des broches (9) comporte 2 à 8 corps de broyage (7), et donc le nombre est de préférence de 4 corps de broyage par broche.

6. Moulin à os (1) selon l'une quelconque des revendications précédentes, **caractérisé en ce que** les corps de broyage (7) sont disposés sur la broche (9) de sorte que les pistes (14) figurant sur la surface du corps de broyage dans les corps de broyage adjacents forment des spirales fonctionnant vers le centre de l'entrée de broyage (16).

7. Moulin à os (1) selon l'une quelconque des revendications précédentes, **caractérisé en ce que** le corps de broyage présente un diamètre de 20 à 150 mm, de sorte que ce diamètre est de préférence de 50 à 100 mm.

8. Moulin à os (1) selon l'une quelconque des revendications précédentes, **caractérisé en ce que** le canal de traitement (2) comporte dans son entrée de broyage (16) des parties d'engagement (17) avec un plan de glissement orienté dans une direction sensiblement en regard de la broche du corps de broyage la plus proche (9).

9. Moulin à os (1) selon la revendication 8, **caractérisé en ce que** la partie d'engagement (21) présente une dentelure orientée vers le corps de broyage (7) agencée pour interagir avec les inserts de broyage (8) du corps de broyage.

10. Moulin à os (1) selon l'une des revendications précédentes, **caractérisé en ce que** le canal de traitement (2) présente une section transversale sensiblement carrée avec une vis sans fin (3) de forme sensiblement cylindrique dans celui-ci.

11. Moulin à os (1) selon la revendication 10, **caractérisé en ce que** la vis d'alimentation (3) a une longueur inférieure à la longueur du logement de la vis sans fin, dans lequel
une zone d'alimentation sans vis (18) est obtenue entre l'unité de broyage (6) et l'extrémité de la vis d'alimentation.
